# Europäisches Patentamt
## European Patent Office
## Office européen des brevets

(19)

(11) Veröffentlichungsnummer: **0 094 573**

**B1**

(12)

# EUROPÄISCHE PATENTSCHRIFT

(45) Veröffentlichungstag der Patentschrift:
03.09.86

(51) Int. Cl.⁴: **B 01 D 53/34**, B 01 D 47/14

(21) Anmeldenummer: **83104469.8**

(22) Anmeldetag: **06.05.83**

(54) **Vorrichtung zur Reinigung von Abluft.**

(30) Priorität: **13.05.82 DE 3217923**

(43) Veröffentlichungstag der Anmeldung:
**23.11.83 Patentblatt 83/47**

(45) Bekanntmachung des Hinweises auf die Patenterteilung:
**03.09.86 Patentblatt 86/36**

(84) Benannte Vertragsstaaten:
**AT BE CH DE FR GB IT LI NL SE**

(56) Entgegenhaltungen:
DE-A-2 205 593
DE-A-2 237 929
DE-A-2 547 675
DE-A-2 643 211
DE-A-2 746 648
US-A-1 701 825
US-A-2 200 581
US-A-3 216 905
US-A-3 556 734
US-A-3 686 830
US-A-3 948 608
US-A-4 039 307

Patent Abstracts of Japan Band 5, Nr. 89, 10. Juni
1981

(73) Patentinhaber: **GENERAL SIGNAL CORPORATION,
PO Box 10010 High Ridge Park, Stamford
Connecticut 06904 (US)**

(72) Erfinder: **Griem, Michael, An den vier Wegen 5,
D-6140 Bensheim 5 (DE)**
Erfinder: **Müller, Wolfgang, Zum Hesselberg 12,
D-6149 Rimbach- Albersbach (DE)**
Erfinder: **Neumann, Günter, Weinbergstrasse 19,
D-6100 Darmstadt (DE)**

(74) Vertreter: **Katscher, Helmut, Dipl.- Ing.,
Bismarckstrasse 29, D-6100 Darmstadt (DE)**

EP 0 094 573 B1

## Beschreibung

Die Erfindung betrifft eine Vorrichtung zur Reinigung von Abluft durch biologischen Abbau der von Waschwasser absorbierten Verunreinigungen durch aerobe Mikroorganismen, mit einem Wäscher mit einem Füllkörperbett, über das das Waschwasser durch einen Waschwasserkreislauf geführt wird und durch das die Abluft strömt, mit einem Bewuchs von Mikroorganismen auf den Füllkörpern des Füllkörperbetts und mit einem das Waschwasser sammelnden Wäschersumpf unter dem Füllbett.

Hierbei wird zugleich mit dem Verfahrensschritt der Absorption der Verunreinigungen durch das Waschwasser der weitere Verfahrensschritt der biologischen Reinigung durch Abbau der Verunreinigungen mittels lebender Mikroorganismen durchgeführt.

Das aus dem Füllkörperbett austretende Waschwasser ist bereits von den aufgenommenen Verunreinigungen gereinigt und kann daher im Kreislauf unmittelbar wieder dem Füllkörperbett zugeführt werden.

Die bekannte Vorrichtung (US-A-2 200 581) ist einstufig ausgeführt und deshalb nicht dazu geeignet, unterschiedliche Verunreinigungen aus der Abluf zu entfernen, insbesondere solche unterschiedlichen Verunreinigungen, die zur Absorption unterschiedliche chemische Eigenschaften des Waschwassers voraussetzen, beispielsweise unterschiedliche ph-Werte.

Zu diesen organischen Luftverunreinigungen gehören insbesondere Geruchsstoffe, die schon in sehr geringer Konzentration zu erheblichen Geruchsbelästigungen führen, beispielsweise Amine und Merkaptane und andere Kohlenstoffverbindungen.

Außerdem ist bei der bekannten Vorrichtung vorgesehen, als Füllkörper gebrochene Steine, Porzellanringe oder dgl. zu verwenden. Derartige Füllkörperbetten werden jedoch vom Waschwasser nicht ausreichend durchströmt, so daß sich Bereiche unzureichender Sauerstoffversorgung ausbilden können, in denen die Lebensbedingungen der aeroben Mikroorganismen so eingeschränkt werden, daß sich anaerobe Zustände bilden, die zu einer Störung des biologischen Abbauvorgangs führen.

Aufgabe der Erfindung ist es daher, eine Vorrichtung der eingangs genannten Art so auszugestalten, daß auch unterschiedliche Verunreinigungen wirksam abgebaut werden können, ohne daß die Gefahr der Ausbildung von anaeroben Zonen besteht.

Diese Aufgabe wird erfindungsgemäß dadurch gelöst, daß mehrere Wäscherstufen hintereinandergeschaltet sind und nacheinander von der Abluft durchströmt werden, daß jede Wäscherstufe einen gesonderten Waschwasserkreislauf mit jeweils unterschiedlichen chemischen Eigenschaften des Waschwassers aufweist, und daß die Füllkörper der Füllkörperbetten der Wäscherstufen filamentartig geschlungene Windungen aufweisen, die auf einer Torusfläche liegen und jeweils an mindestens einer Umfangsstelle miteinander verbunden sind.

In jeder einzelnen Wäscherstufe können die chemischen und physikalischen Eigenschaften des dort im Kreislauf geführten Waschwassers so eingestellt werden, daß eine wirksame Absorption der Verunreinigungen erfolgt, die in der jeweiligen Wäscherstufe abgebaut werden sollen. Dabei werden die Lebensbedingungen gerade für diejenigen Mikroorganismen, die diese besonderen Verunreinigungen biologisch abbauen, in dieser einzelnen Wäscherstufe besonders günstig gestaltet. Die filamentartig geschlungenen Windungen der Füllkörper ergeben eine große freie Füllkörperoberfläche und ausreichend Durchtrittkanäle für die Luft, so daß in allen Bereichen des Füllkörperbettes eine ausreichende Sauerstoffversorgung und damit die Aufrechterhaltung eines aeroben Zustandes sichergestellt sind.

Die mehrstufige Ausführung von biologisch arbeitenden Vorrichtungen zur Reinigung von Abluft ist zwar bekannt (DE-A 26 43 211). Dort ist auch angegeben, daß sich in den einzelnen Wäscherstufen unterschiedliche Biozönosen ausbilden sollen. Bei der bekannten Vorrichtung sind die die einzelnen Stufen bildenen Füllkörperbetten aber übereinander angeordnet und werden von demselben Waschwasserkreislauf versorgt, der einen gemeinsamen Wäschersumpf unterhalb der Füllkörperbetten aufweist. Es ist deshalb nicht möglich, die beiden Wäscherstufen mit Waschwasser unterschiedlicher chemischer Eigenschaften zu versorgen, so daß weder die Absorptionsverhältnisse noch die Lebensbedingungen der Mikroorganismen in den beiden Wäscherstufen unterschiedlich gewählt werden können. Es ist deshalb insbesondere nicht möglich, eine unterschiedliche selektive Absorption der Verunreinigen in den einzelnen Wäscherstufen vorzusehen.

Aus denselben Gründen sind auch andere bekannte Vorrichtungen zur Reinigung von Abluft, die mehrstufig ausgeführt sind, nicht zur Lösung der zugrundeliegenden Aufgaben geeignet (US-A-4 039 3o7, US-A 3 948 608, US-A 3 556 734, US-A 1 701 825, Patent Abstracts of Japan Band 5, Nr. 89, 10. Juni 1981, JP-A-56-3302 =).

Die Ausbildung der filamentartig geschlungenen Windungen der Füllkörper ist an sich ebenfalls bekannt (US-A 3 752 453). Es hat sich jedoch überraschend gezeigt, daß gerade die Verwendung dieser Füllkörper geeignet ist, die bei mehrstufigen Wäschern auftretenden Probleme einer gleichmäßigen Durchströmung und gleichmäßigen Sauerstoffversorgung der hintereinandergeschalteten Wäscherstufen zu lösen.

Die Erfindung wird nachfolgend an Ausführungsbeispielen näher erläutert, die in der Zeichnung dargestellt sind. Es zeigt:

Fig. 1 in stark vereinfachter Darstellungsweise einen nach dem Kreuzstromprinzip arbeitenden Naßwäscher für die biotechnische Abluftreinigung.

Fig. 2 einen im Naßwäscher nach Fig. 1 verwendeten Füllkörper,

Fig. 3 in einer Darstellung ähnlich der Fig. 1 einen im Gegenstromprinzip arbeitenden Naßwäscher und

Fig. 4 eine mehrstufige Anlage zur Durchführung des Reinigungsverfahrens für Abluft, ebenfalls im Kreuzstromprinzip arbeitend.

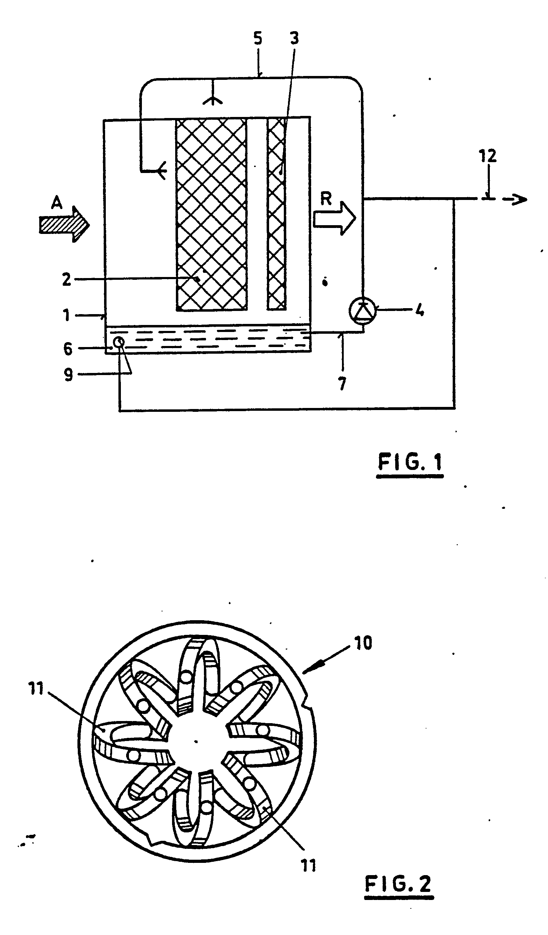

Der in Fig. 1 gezeigte Kreuzstromwäscher weist ein Wäschergehäuse 1 auf, in dem ein Füllkörperbett 2 angeordnet ist. Auf der einen Seite des Füllkörperbetts 2 wird die zu reinigende Abluft, dargestellt durch den Pfeil A, zugeführt. Die Abluft strömt durch das Füllkörperbett 2 und wird dabei gereinigt. Auf der anderen Seite des Füllkörperbetts 2 tritt die Luft aus und passiert einen Tropfenabscheide, 3, der mitgerissene Wassertropfen abscheidet. Dann verläßt die Reinluft, dargestellt durch den Pfeil R, den Kreuzstromwäscher.

Eine Pumpe 4, die beispielsweise als einfache Kreiselpumpe ausgeführt ist, führt dem Füllkörperbett 2 von oben und seitlich durch eine Rohrleitung 5 Waschwasser zu, das von oben nach unten durch das Füllkörperbett 2 rieselt und die darin enthaltenen Füllkörpe, benetzt. Unterhalb des Füllkörperbetts 2 sammelt sich das Waschwasser in einem Waschwassersumpf 6, von wo es über eine Rohrleitung 7 durch die Pumpe 4 abgezogen und im Kreislauf gefördert wird.

Eine im Wäschersumpf 6 arbeitende Bodenspüleinrichtung wird von der Umwälzpumpe 4 versorgt und ist mit Spülrohren 9 verbunden. Sie sorgt dafür, daß das Waschwasser im Wäschersumpf 6 ständig in Bewegung bleibt.

Das Füllkörperbett 2 besteht aus einer Schüttung von Füllkörpern 10, von denen einer in Fig. 2 dargestellt ist. Der Füllkörper 10 weist z.D. filamentartig geschlungene Windungen 11 auf, die auf einer Torusfläche liegen und an ihrer jeweils inneren und/oder äußeren Umfangsstelle miteinander verbunden sind. Der Füllkörper besteht aus Kunststoff.

Durch ihre besondere Formgebung bewirken die Füllkörper 10, auch Tropfkörper genannt, einen optimalen Kontakt der zu reinigenden Abluft mit dem als dünner Film über die Füllkörper 10 rieselnden Waschwasser. Auf der Oberfläche der Füllkörper 10 ist eine aus Mikroorganismen bestehende Biomasse als biologischer Rasen angesiedelt, der die aus der Abluft durch Absorption in das Wasser aufgenommenen Verunreinigungen, beispielsweise Geruchsstoffe, als Nahrung aufnimmt und in einem Oxidetionsprozeß biologisch abbaut.

Die Bildung des biologischen Rasens geschieht selbsttätig und dauert etwa bis zu 6 Wochen. Diese Zeit kann auf etwa 2 bis 3 Wochen verkürzt werden, indem man das Waschwasser mit Mikroorganismen impft.

Ein Teil des im Kreislauf geführten Waschwassers wird durch eine in Fig. 1 gestrichelt angedeutete Leitung 12 kontinuierlich auf der Pumpendruckseite abgezogen und dem Abwassernetz zugeführt. Mit diesem Ausschleusen von Waschwasser werden Stoffwechselprodukte der Mikroorganismen, insbesondere gelöste Salze, aus dem im Kreislauf geführten Waschwasser entfernt und dadurch eine Zunahme der salzkonzentration vermieden. Die Frischwasserzugabe erfolgt über eine (nicht dargestellte) Niveausteuerung.

Weitere Stoffwechselprodukte biologischer Abbauvorgänge, nämlich Kohlendioxid und Wasser, werden an die Luft bzw. an das Waschwasser abgegeben.

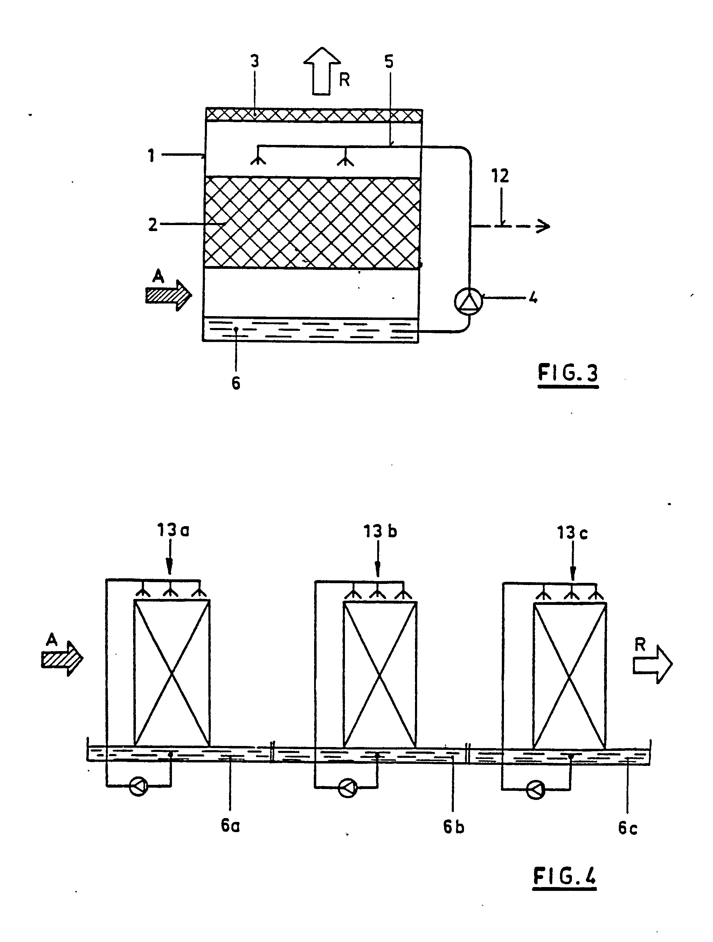

Das in Fig. 3 gezeigte Ausführungsbeispiel unterscheidet sich von dem Ausführungsbeispiel nach Fig. 1 nur dadurch, daß es sich hier um einen Gegenstromwäscher handelt, bei dem das Füllkörperbett 2 von oben über die Leitung 5 mit Waschwasser berieselt wird, das nach unten in den Wäschersumpf 6 gelangt und von dort durch die Pumpe 4 wie beschrieben im Kreislauf geführt wird. Die seitlich eintretende Abluft A strömt hierbei im Gegenstrom zum Waschwasser, nämlich von unten nach oben durch das Wäschergehäuse 1 und verläßt es als Reinluft R an der Oberseite nach dem Passieren des an der Oberseite angeordneten Tropfenabscheiders 3.

Bei einem Anwendungsversuch wurde Abluft aus Metallgießereien, die tertiäre Amine enthielt, mit dem beschriebenen Verfahren gereinigt. Tertiäre Amine werden als Katalysatoren zum schnellen Durchhärten von Sandkernen in Kernschießmaschinen verwendet. Diese Katalysatordämpfe erzeugen eine starke Geruchsbelästigung auch schon in geringer Konzentration und müssen deshalb aus der Abluft entfernt werden.

Beim Anfahren der Anlage wurde durch Absorption der Amine im Waschwasser den spezifischen Bakterienstämmen Nahrung zugeführt, so daß eine vermehrung der Mikroorganismen stattfindet, so daß diese imstande sind, sämtliche Verunreinigungen als Nahrung aufzunehmen. Der auf den Füllkörpern 10 als festem Substrat angesiedelte biologische Rasen, dessen Schichtdicke von dem Nahrungsangebot, d.h. von der Konzentration an abzubauenden Verunreinigungen anhängig ist, baut die Amine stufenweise über Ammoniak und Nitrit bis zum Nitrat ab. Bei einer Aminkonzentration von etwa 33 ppm in der zu reinigenden Abluft wurde im Versuch bei kontinuierlichem Betrieb ein Reinigungs-Wirkungsgrad bei einer einstufigen Wasserwäsche mit Biologie von etwa 98 % erzielt.

Um während der betriebsbedingten Stillstandszeiten der Anlage, beispielsweise an Wochenenden, die Mikroorganismen lebensfähig zu erhalten, wird der Wasserkreislauf aufrechterhalten und ein geringer Belüftungs-Luftstrom durch das Füllkörperbett geleitet.

Mehrere Naßwäscher der beschriebenen Ausführungen werden als Wäscherstufen hintereinandergeschaltet und bilden eine mehrstufige Anlage, die dazu dient, unterschiedliche Verunreinigungen aus der Abluft zu entfernen, deren Absorption durch das Waschwasser von chemischen Eigenschaften des Waschwassers günstig beeinflußt werden kann, insbesondere vom pH-Wert. Zur Absorption der basischen Luftverunreinigungen wird eine Stufe mit schwefelsaurer Lösung und eine zweite Stufe mit Natronlaugelösung betrieben. Hierbei wird die Säure- bzw. Laugenkonzentration so gering gehalten, daß sich die Mikroorganismen an dieses Milieu anpassen können, zugleich aber eine größere Affinität zu den Verunreinigungen gegeben ist. Eine solche mehrstufige Anlage ist in Fig. 4 dargestellt. Dort sind drei Kreuzstromwäscher 13a, 13b, 13c hintereinander angeordnet, die in dieser Reihenfolge von der Abluft A durchströmt werden, die den letzten Kreuzstromwäscher 13c als Reinluft R verläßt. Der Aufbau der einzelnen Kreuzstromwäscher 13a, 13b und 13c entspricht dem in Fig. 1 gezeigten Kreuzstromwäscher. Die zugehörigen Wäschersümpfe 6a, 6b und 6c sind voneinander getrennt. Stattdessen können beispielsweise auch Gegenstromwäscher nach Fig. 3 eingesetzt werden.

## Patentansprüche

1. Vorrichtung zur Reinigung von Abluft durch biologischen Abbau der von Waschwasser absorbierten Verunreinigungen durch aerobe Mikroorganismen, mit einem Wäscher mit einem Füllkörperbett (2), über das das Waschwasser durch einen Waschwasserkreislauf (4, 5) geführt wird und durch das die Abluft strömt, mit einem Bewuchs von Mikroorganismen auf den Füllkörpern (10) des Füllkörperbetts (2) und mit einem das Waschwasser sammelnden Wäschersumpf (6, 6a, 6b, 6c) unter dem Füllkörperbett (2), dadurch gekennzeichnet, daß mehrere Wäscherstufen (13a, 13b, 13c) hintereinandergeschaltet sind und nacheinander von der Abluft (A) durchströmt werden, daß jede Wäscherstufe einen gesonderten Waschwasserkreislauf (4, 5) mit jeweils unterschiedlichen chemischen Eigenschaften des Waschwassers aufweist, und daß die Füllkörper (10) der Füllkörperbetten (2) der Wäscherstufen filamentartig geschlungene Windungen (11) aufweisen, die auf einer Torusfläche liegen und jeweils an mindestens einer Umfangsstelle miteinander verbunden sind.

2. Vorrichtung nach Anspruch 1, dadurch gekennzeichnet, daß im Wäschersumpf (6, 6a, 6b, 6c) eine vom Waschwasser durchströmte Bodenspüleinrichtung (9) vorgesehen ist.

## Claims

1. Device for the purification of waste air by biochemical decomposition by aerobic microorganisms of the contaminations absorbed by washing water, with a washing unit with a packed bed (2) over which the wash water is led by a wash water circuit (4, 5) and through which the waste air flows, with a growth of microorganisms on the packing units (10) of the packed bed (2) and with a washing unit sump (6, 6a, 6b, 6c) which collects the wash water under the packed bed (2), characterised by the fact that several washing unit stages (13a, 13b, 13c) are connected in series and through which the waste air (A) flows through consecutively, that each washing unit stage has a seperate wash water circuit (4, 5), each having different chemical characteristics of the wash water, and that the packing units (10) of the packed beds (29) of the washing unit stages have filament-like loops which lie on a torus surface and in each case are interconnected at at least one peripheral point.

2. Device according to Claim 1, characterised by the fact that a bottom rinsing device (9) through which the wash water flows is provided in the washing unit sump (6, 6a, 6b, 6c).

## Revendications

1. Dispositif pour l'épuration de l'air d'évacuation par dégradation biologique des impuretés absorbées par de l'eau de lavage au moyen de microorganismes aérobies en utilisant un appareil laveur comportant un lit d'éléments de garnissage (2) sur lequel l'eau de lavage est amenée en un circuit d'eau de lavage (4, 5) et à travers lequel passe l'air d'évacuation, les garnissages (10) du lit d'éléments de garnissage (2) comportant un revêtement de microorganismes et un bac de decantation du laveur (6, 6a, 6b, 6c) étant prévu en dessous du lit d'éléments de garnissage (2) pour recueillir l'eau de lavage, caractérisé en ce que plusieurs étages de laveur (13a, 13b, 13c) sont installés l'un derrière l'autre et sont parcourus l'un après l'autre par l'air d'évacuation (A), en ce que chaque étage de laveur comporte un circuit d'eau de lavage (4, 5) séparé ayant chacun des propriétés chimiques distinctes en ce qui concerne l'eau de lavage et en ce que les garnissages (10) des lits d'éléments de garnissage (2) des étages de laveur présentent des enroulements filamenteux tordus (11) qui se trouvent sur le plan d'un tore et qui sont reliés entre eux en au moins un endroit de leur pourtour.

2. Dispositif suivant la revendication 1 caractérisé en ce qu'il est prévu dans le bac de décantation (6, 6a, 6b, 6c) du laveur un dispositif de nettoyage du fond (9) qui est parcouru par l'eau de levage.

0 094 573

FIG. 1

FIG. 2

1

0 094 573

FIG.3

FIG.4

3